# EUROPEAN PATENT APPLICATION

(11) **EP 2 388 373 A1**
(43) Date of publication of application: **23.11.2011**
(21) Application number: 10425173.1
(22) Date of filing: 20.05.2010
(51) Int. Cl.: D21B 1/32, D21B 1/34

(54) **Process and apparatus for wet pre-treatment of waste material, with low density particles removal**

(71) Applicant: Biotec Sistemi S.r.l., 16010 Serra Riccò Genova (IT)
(72) Inventor: Bozano Gandolfi, Paolo, 16122 Genova (IT)
(74) Representative: Ferroni, Filippo

(57) **Abstract**

The invention relates to a pre-treatment of waste materials before their anaerobic digestion, in apparatuses for treating urban garbage.

According to the invention, a mixture of waste material and water is subjected to shearing forces thereby obtaining a crude mixture; after having removed heavy particles from the mixture, the process provides for removing small dimension particles of low density material, by evacuating a surface layer of the crude mixture or of the suspension obtained therefrom

## Description

The present invention relates to a process for wet pre-treatment of waste material, usually carried out before anaerobic digestion of biogenic organic constituents thereof.

Anaerobic digestion is a well known process of biotechnological type for treatment of wastes; the outcome of this process allows to obtain products such as biogas, organic pulps suitable for being transformed into compost and other recyclable commodities.

In order to obtain a good result from this kind of process, it is necessary to feed the digestor (i.e. the reactor where the anaerobic digestion takes place) with an organic pulp, free from non-digestable contaminants.

For this purpose it becomes important the pre-treatment of the material upstream the digestor, where separation of organic and inorganic constituents occurs; this task is rather difficult because the mix of waste materials is never the same, since it depends on the urban garbage that are collected and therefore can change from one day to another.

From US Patent 5,377,917 it is known a wet pre-treatment of wastes aiming to achieve a final organic biogenic pulp, free from contaminants.

In short, this prior reference discloses a treatment where the wastes collected in bags pass into a ripper so that the components of the crude garbage are slightly disintegrated and loosened.

The crude garbage from which ferrous metals have been substantially removed is then fed to a pulping vessel, in which process water is added and the garbage is subjected to combined hydraulic and mechanical shearing forces to produce crude mixture substantially free of non-digestable materials.

When the mixture has been pumped off and the pulping vessel has been refilled with process water, the heavy solids are withdrawn.

The light weight substances, i.e. non-digestable substances having a specific density differing only slightly from water and that therefore float in the water or reach the surface, are removed and may be optionally subjected to a post-treatment to remove the biogenic adhering organic substances, such as fibres and the like.

More specifically, according to this prior art, the heavy particles are evacuated from below of the pulper vessel through the holes of a sieve bottom, while the light weight substances are removed from above by means of a raking device.

Alternatively, the heavy particles may be evacuated also by means of a double valve.

The latter comprises a tine carrier which is adapted to be immersed below the liquid level in the pulping vessel, so that its tines can catch the lightweight substances.

This means that the raking device of this prior art is suitable for removing substances that can be mechanically raised by tines; moreover, since it operates while it is immersed into the crude mixture, it is effective basically on the materials which float into the mass of liquid.

As a consequence the small particles such as those less than 10 mm, having low density (about 0,2-0,5) cannot be removed from the pre-treatment known from US 5,377,917; a typical example of this kind of particles are the polystyrene granules, generated by the splitting of packaging due to the shearing forces originated into the pulper vessel.

A small quantity of these granules can render the end product of the digestion (i.e. the so called "digestate") of poor quality, not acceptable for some applications; this situation can also cause economic losses.

From the same prior art document it is also known to provide, instead of the raking device, a washing compartment comprising a closed vessel connected to the pulping vessel by a line.

When the crude mixture is removed from the pulping vessel, the lightweight substances are entrained by process water used to flush the lower part of the pulping vessel, after a gate valve has been opened

As it can be understood, this variant requires a washing compartment specifically aimed for this purpose, where process water and optionally fresh water are added; as a consequence further separated elements must be added to the pulping vessel, as well as particular operating steps must be carried out which render more complex the wet pre-treatment.

Furthermore, in the case of low density-small dimension materials like the polystyrene granules, the above variant disclosed in US 5,377,917 does not seem to be effective because at least part of the light particles remain on the bottom of the pulping vessel, when flushed with process water.

It is therefore an object of the present invention to provide a process for wet pre-treatment of wastes, suitable to remove low density-small dimension particles from a suspension which has to be forwarded to anaerobic digestion.

It is a further object of the invention to provide a process where removal of this kind of particles can be carried out, also in the cases where a raking device is provided for taking lightweight substances from the suspension.

These and further objects are achieved by a process whose characterizing features are set forth in the appended claims.

The present invention relates also to an apparatus for carrying out the process for wet pre-treatment of wastes, whose features are also set forth in the claims.

These features will become more apparent from the description that is now provided herein below of a preferred and non-exclusive embodiment of the invention, shown in the attached drawings wherein:
- Fig. 1 is a schematic view of an apparatus for wet pre-treatment of wastes, in accordance with the present invention;
- Fig. 2 is a schematic view of an alternative embodiment of the apparatus of fig. 1;

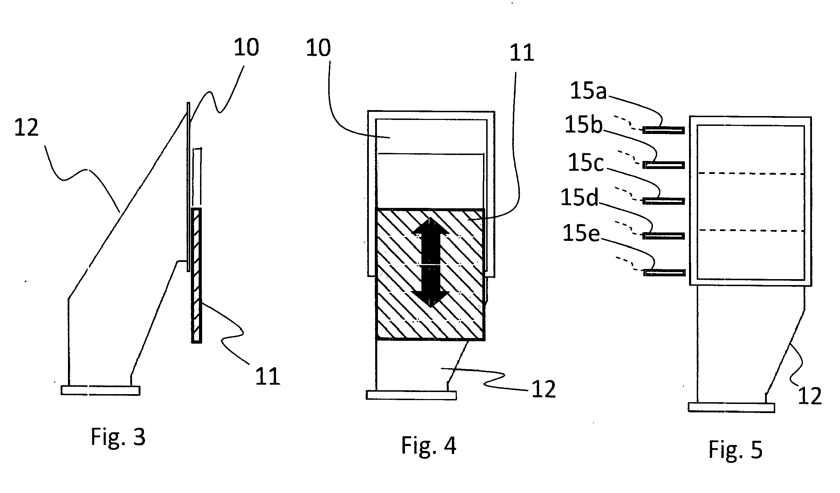

- Fig. 3, 4 and 5 show from different respective view a detail of the apparatus of fig. 1. In the drawings and in particular fig. 1 thereof, reference numeral 1 denotes a whole apparatus for carrying out a process of wet pre-treatment of wastes, according to the invention.

Such an apparatus comprises a pulping vessel 2 where crude garbage consisting of biogenic organic substances and other non-digestable substances, are fed from above through a hopper 3 in a manner known per se, for instance like in US 5,377,917 whose content is hereby incorporated by reference.

Therefore the pulping vessel 2 is designed substantially like a pulper used to process waste paper, inside which there is an impeller 5 mounted at the lower end of a vertical shaft 6 driven by an electric motor and a belt transmission system not shown in the drawings.

On the bottom of the pulping vessel 2 there is provided a screen 7, preferably shaped as a truncated cone although any other suitable shape can be used, through which the suspension present inside the pulping vessel can be drained; the screen is provided with holes of about 8 to 12 mm in diameter and downstream thereof there is a valve 8 which, in the open condition, allows the suspension to flow away, as will be explained in more detail later.

Near the sieving screen 7 there are also two valves 9 suitable for the removal of the solid coarse material with dimensions greater that 8-12 mm, i.e. the dimension of the holes of the screen.

In the upper part of the wall of the pulping vessel 2 there is a port 10 closed by a sliding shutter 11: the latter is basically a frame with a window, that can be raised or lowered in order to leave the upper layer of the crude mixture contained inside the pulper, to enter a manifold 12.

According to a preferred embodiment, in connection with the port 10 and the sliding shutter 11 there is provided a series of limit switches 15a, 15b, 15c, 15d, 15e that serve to determine the state of the valve, i.e. the rate of opening or closing of the shutter; the number of the switches may vary depending on different parameters (such as the dimensions of the port 10 and of the pulping vessel 2).

The switches give information under the form of electric signals to the process control system (i.e. a PLC or any other suitable computerized system known per se), that determines whether the sliding shutter 11 must be raised or lowered depending upon these information and the level of the liquid inside the pulping vessel 2; of course, driving means such as hydraulic pistons, rack and pinion mechanisms or other solutions are provided in the apparatus for driving the sliding movements of the shutter 11.

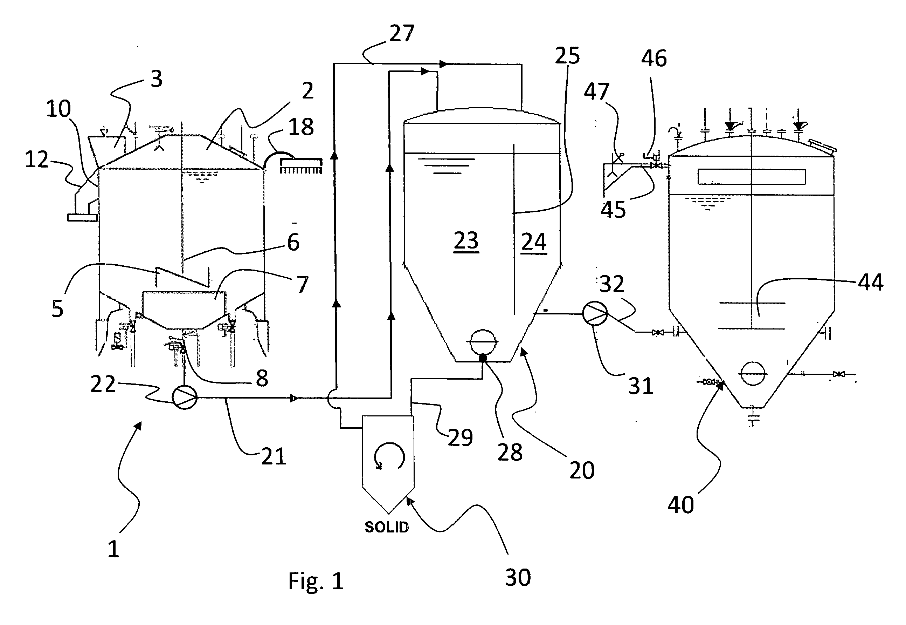

In this embodiment of the apparatus 1 according to the invention, the pulping vessel is provided with a raking device 18 of known type, that can be immersed in the mixture contained in the vessel in order to pick up the floating contaminants of larger dimensions and then be brought to the operating condition shown in fig. 1, wherein it discharges the contaminants picked up.

Of course, the pulping vessel 2 and more generally the apparatus 1 is also provided with pumps, valves, conduits and any other means that are well known to those skilled in the art, suitable for carrying out the wet pre-treatment of wastes.

Such means have not been shown in the drawings and are not described here for sake of clarity.

In the apparatus 1 for carrying out the wet pre-treatment, the pulping vessel 2 is in fluid communication downstream with a storage tank 20 by means of line 21 and a pump 22.

The storage tank 20 has a capacity which is greater than that of the pulping vessel 2; this is due to the fact that wastes are loaded into the pulping vessel by batches and the processing time therein is shorter than that of the anaerobic digestion: as a consequence throughout the apparatus 1 there must be a compensation for these differences.

Preferably the pulping vessel 2 has a capacity comprised between 4 and 35 m³, whereas the storage tank 20 has a preferred capacity from 20 to 120 m³.

In accordance with the embodiment shown in fig. 1, the storage tank 20 is divided into two parts 23, 24 by a partition 25: in the first part there is fed the fluid suspension arriving from the pulping vessel 2, filtered by the screen 7 on the bottom thereof; such a fluid is a suspension of organic substances which is preferably further treated before being forwarded to the digestion.

More specifically, the suspension is kept into the first part 23 of the storage tank 20 in still conditions so that heavier impurities can precipitate and deposit on the bottom of the tank, where they are evacuated from time to time through a valve 28 and a conduit 29.

The latter brings the impurities to a solid-liquid separator 30, of known type; preferably the separator 30 is a device also known in the art as hydro cyclone, wherein the heavy particles of non-digestable material such as sand, glass, stone and the like, are centrifugally separated and discarded downward, while the remaining fluid suspension flows upward and is fed into the second part 24 of the storage tank 20, via a returning line 27.

From the latter the suspension is forwarded to a static separator 40; in order to avoid the presence of impurities, the suspension is made to flow out of the storage tank 20 at a higher level than the bottom and for this purpose a pump 31 and a line 32 are arranged at about half the height of the wall of the storage tank 20.

The static separator 40 is a vessel having preferably a capacity equivalent to that of the storage tank 20, where a specific removing step of the low density-small dimension particles is carried out, in accordance with a preferred embodiment of the present invention; such a step takes place with a low agitation speed of the suspension, so that separation is rather static with respect to the liquid/solid separator 21 that works under high centrifugal conditions.

More specifically, the static separator 40 may work according to either a continuous or discontinuous mode; in the continuous mode the feed stream enters the separator in the middle part (far from the top and from the bottom) and the suspension is mixed gently with a mechanical stirrer 44 having preferably a variable speed to optimize the mixing ratio, or with compressed air/gas at controllable rate and pressure.

Reagents may be added to improve the separation; the low density, small dimensions hydrophobic materials float and are recovered in the same manner as it occurs in the pulping vessel 2.

For this reason a spilling conduit 45 with a valve 46 are provided, to allow the suspension flowing toward a collecting trough 47; optionally, mechanical devices can be foreseen such as rotating scraper/blade linked to the shaft of the mixing stirrer 44 or equivalent, in order to accelerate removal of the floating materials.

Any heavy particle that sinks to the bottom of the separator 40 can be extracted via a valve (not shown in the drawings) and a conduit bringing to a solid/liquid separator like separator 30 before; in this case the separated liquid can be returned again into the static separator 40 or elsewhere.

The suspension agitated by the stirrer is evacuated from the separator 40 for being anaerobically digested into a digestor (not shown in the drawings); optionally, between the latter and the separator 40 there can be provided a thickener, i.e. a further vessel wherein the suspension is treated for being rendered more dense before treating it in the digestor.

From the foregoing explanation of the apparatus 1, the process of the present invention can now be understood.

As stated above, the pulping vessel 2 is loaded by batches of waste material, usually collected in plastic bags that are suitably opened by a ripper device of known type.

The pulping vessel 2 is then filled with water and the impeller 5 activated so that the waste material is subjected to combined hydraulic and mechanical shearing forces to produce a crude mixture which is substantially free of non-digestable material.

More specifically, at this stage the working cycle of rake 18 is started for removing the floating materials of larger dimensions, which are not biogenic organic substances; these materials can be pieces of plastic film deriving from the bags where the garbage are collected, wood or others.

At the end of the raking cycle the viscosity of the pulper content is very low, similar to water viscosity: therefore, if small particles of non-digestable material still float on the surface of the crude mixture, such as small polystyrene particles already referred to above, then removal according to the present invention is carried out.

For this purpose the sliding shutter 11 is opened so that the upper layer of the suspension can flow away from the port 10 of the vessel 2 and be collected by the manifold 12.

During this operation the stirrer 5 should rotate at a very low speed so as to help to bring the floating material closer to the spilling conduit, without causing the sinking of the light material due to hydraulic forces: indeed, rotational speed along the vertical axis is positive, while rotational speed along the horizontal axis is negative.

Afterward the crude mixture is evacuated from the pulping vessel 2 by letting it to pass through the sieve 7; as a consequence the solid coarse material (i.e. having dimensions larger than the 8-12 mm holes of the sieve) remains on the bottom of the pulping vessel 2, whereas the fluid fraction passes by the valve 8 and is fed by the pump 22 to the storage tank 30.

In order to remove the solid coarse deposited on the bottom of the pulping vessel 2, the latter is rinsed with process water, i.e. water already used in the apparatus 1 but filtered and treated so as to be used again; the solid coarse material is discharged by means of a double valve
as a consequence, in this stage the mixture inside the pulping vessel has a very low density because it is mainly aqueous, so that another removing cycle according to the invention can advantageously, although not necessarily, be carried out, whenever low density particles still float on its surface.

Therefore, in such a case the sliding shutter 11 is opened again and the upper layer of the liquid inside the vessel 2 can pass through the port 10, to be collected by the manifold 12 from which it is directed toward a collecting system of process water

It should be emphasized here that the operating steps just mentioned can be modified and their phases be mixed, depending also on the composition of the waste to be treated and the viscosity of the mixture.

For instance, another working cycle could be carried out, wherein extraction of the crude mixture from the pulping vessel is made right after having subjected the mixture inside the pulping vessel to the shearing forces (i.e. without raking cycle).

After extraction of the crude mixture the pulping vessel is rinsed with process water and it is at this stage that the light contaminants are removed with the raking cycle, while the heavy particles are discharged from the bottom of the vessel 2, through the double valve 9.

Once the light contaminants and the heavy particles have been removed, it is possible to process the light floating polystyrene as already explained above, i.e. by opening the sliding shutter 11 and let the surface layer of the rinsing water to go out of the vessel 2; since the vessel is filled with process water, the viscosity of the liquid is very low and the floating polystyrene can be easily removed.

On this subject it should be stressed that irrespective of the order of operating phases carried out in the vessel, the outflow of the liquid with floating polystyrene is determined by the level reached inside the vessel 2: indeed when the sliding shutter is closed, the level of the liquid can be higher than the uppermost switch 15a or below it as any of the levels set by the other switches 15b-15e, or also below the lowest switch 15e. In the former case, when the raking cycle is completed the level of the crude mixture or liquid inside the pulping vessel 2 is checked and the sliding shutter 11 is opened down to the lower limit switch 15e position.

More specifically, if the level is higher than the upper switch 15a, then the pulping vessel 2 may be emptied from below through the valve 8, until the level of the upper switch 15a; if the level of the mixture at the end of the raking cycle is below the lower switch limit 15e, then the pulping vessel 2 is filled up until the level corresponding to the lowermost switch 15e.

In any case, when the sliding shutter 11 is opened the surface layer of the mixture contained in the vessel exits out of the vessel 2 through the port 10; since the small particles of low density material float on the surface of the mixture, they are also removed through the port.

It can be appreciated that removal of low density particles is rather simple and fast, since no particular changes must be made to the normal working cycle of the apparatus 1 and to the wet pre-treatment process of waste materials.

Indeed, such a removal requires only to discharge the surface layer of the crude mixture obtained inside the pulping vessel after having applied the shearing forces, or the surface layer of the process water used to rinse the vessel, depending on the type of cycle carried out by the pulping vessel 2.

In any case, no particular working phases or complex apparatuses are required and only port 10, sliding shutter 11 and manifold 12 need be provided to the pulping vessel.

If any small particles of polystyrene go ahead with the suspension into the storage tank 20, it should be preferably removed during a successive step because the storage tank has mainly the function of compensating the differences between the batch loading of the pulping vessel 2 and the anaerobic digestion, carried out downstream of the wet pre-treatment made by the apparatus 1.

The static separator 40 is provided specifically for removing the polystyrene and other low density particles that can be present in the suspension at the final step, before the anaerobic digestion.

In this separator the suspension is slightly mixed by the stirrer 44 or by means of air or gas jets (not shown in the drawings), so that this agitation allows the low density particles to reach the surface of the fluid mass, even though its density would be too high for floating in case static conditions; at this point the removal of the floating particles can be carried out through the spilling conduit 45 and the evacuation valve 46. The latter allows the upper layer of the suspension contained inside the separator 40 to be spilled out: as a consequence the low density and small dimensions particles floating on the surface of the suspension are removed together with it and collected by a trough 47.

In this case the spilling conduit 45, the valve 46 and the trough 47 are sufficient because the quantity of low density, small dimension particles at this stage is rather low, since most of them have been removed before in the pulping vessel.

However, should this not be the case, conduit 45, valve 46 and trough 47 could be replaced by a port, a sliding shutter and a manifold as those provided in the pulping vessel 2.

From what it has been described hitherto it is possible to understand how the wet pre-treatment according to the invention achieves the object set forth previously.

Indeed the low density-small dimension materials can be effectively removed without providing relevant changes, either to the pre-treatment and to the apparatus for carrying out it.

More specifically, as it has been explained above the wet pre-treatment comprises the same operating steps carried out in the pulping vessel 2, i.e. loading of the waste material and addition of fresh water, rotation of the impeller 5 so as to provide the hydraulic shearing forces that result in defibration of biogenic organic substances, raking cycle to remove the larger floating substances, withdrawal of the suspension. However, according to the teaching of the present invention now there is also the possibility of removing the low density floating particles, which cannot be brought away by the rake 18 because of their small dimension.

This is obtained by entraining the upper layer of the crude mixture out of the vessel 2, through the port 10; it should be emphasised here that this step takes place preferably after the raking cycle, so that the viscosity of the suspension is decreased thereby making easier for the light substances to rise and reach the surface of the suspension. This effect is also enhanced by the fact that the raking cycle mixes the fluid and brings upward the light particles that are soaked into it, because of the viscosity of the crude mixture or of obstacles present therein.

As a consequence the removal of low density and small dimension substances such as the polystyrene particles, does not hinder the development of the wet pre-treatment since it takes a short period of time necessary to spill out the surface layer of the mixture.

In this connection it must be emphasized that the port 10 and the sliding shutter 11 with the limit switches 15a-15e allow to control the removal of the low density particles, under different filling levels of the pulping vessel 2: this ensures an effective removal and also a flexible operation of the working process.

Such a flexibility allows to repeat the removal step also when rinsing of the pulping vessel occurs, after the suspension present therein has been sent to the storage tank 20. Indeed, as stated above during this rinsing stage the pulping vessel 2 is filled with process water so that possible low density particles still present inside it, will float on the surface of the water and can be removed through the port 10 as already explained. Furthermore, in the apparatus 1 of the present invention no washing compartments are specifically required for treating the low density contaminants with process or fresh water, as it occurs in the prior art referred to above; in this connection it should be emphasised that the port 10, the sliding shutter 11 and manifold 12 are rather simple elements that can be applied also to existing pulping vessels, thereby rendering the present invention rather advantageous.

If for any reason the low density material such as small polystyrene particles must be eliminated or at least almost completely removed before being anaerobically digested, according to the present invention a further separation step can be carried out in the static separator 40.

Removal of the floating particles in this separator occurs in a manner similar to that in the pulping vessel, so that the same advantages already referred to above can apply.

In this case, however, since most of the light particles and other contaminants have been removed in the previous steps of the wet pre-treatment, it is sufficient to provide the spilling conduit 45 with the valve 46 and the trough 47 in order to collect the small polystyrene spheres (instead of the port 10, sliding shutter 11 and manifold 12) still present in the suspension.

Although the static separator 40 represents a specific additional vessel provided in the apparatus 1 for the separation of low density particles of small dimension, it must be emphasised that it is basically a tank where the suspension is stored before being sent to the digestor.

This means that no specific treatment is carried out inside it, apart from the slight mixing action of the suspension made by the stirrer 44 (or by air jets not shown in the embodiment considered), for helping the light particles to reach the surface of the suspension and/or the heavy particles to sink on the bottom.

As a consequence the development of the wet pre-treatment is not significantly affected or modified by the passage of the suspension in the separator 40; the same applies also to the apparatus 1 for carrying out the pre-treatment, taking into account that further separators are generally present in the apparatus of the prior art.

Of course, changes will be possible with respect to the foregoing embodiment without departing from the teaching of the invention.

For instance, any improvement to the mixing of the suspension in the pulping vessel 2 or in the second separator 40 can be utilized; therefore, any shape of the impeller 5 or of the stirrer 44 suitable for this purpose may fall within this principle.

Therefore, the conical impeller disclosed US 5,377,917 can be applied to the present invention, as well as a rotor like that described in US Pat. 7,169,263; furthermore, gas or air jets can be used as an alternative to, or in combination with, the impeller 5 and stirrer 44.

Moreover, other possible changes can be made to the process as a whole, with respect to the exemplary embodiment above; indeed it must be stated that the low density, small dimension particles removal phase according to invention, can apply also in the case of wet pre-treatment wherein a thermal and/or chemical processing step is carried out, as in US 5,377,917.

As a consequence, a reactor suitable for pasteurization of the suspension could be added in the apparatus 1 described above, between the pulping vessel 2 and the storage tank 20 or between the latter and the static separator 40.

Furthermore, since the present invention applies to wet pre-treatment of any kind of waste material, not only urban garbage but also biological waste coming from farms, sheds etc., a reactor for the production of biogas can be added to the apparatus 1 already referred to above; the use of a methane reactor for biogas production is well known in the art (for instance from US 5,377,917), so that it could be applied also to the present case.

Another possible operating step to be included in the pre-treatment according to the invention, is that of thickening the suspension before the anaerobic digestion; for this purpose a thickener device can be provided downstream the static separator 40, before the digestor (not shown in the drawings), as already known in the art.

Following this principle, it can be easily understood that the storage tank 20 which in fig. 1 is divided in two parts 23, 24 by the partition 25, could be split in two, i.e. two storage tanks 23',24 can be provided respectively corresponding to the two parts 23, 24 of the storage tank 20.

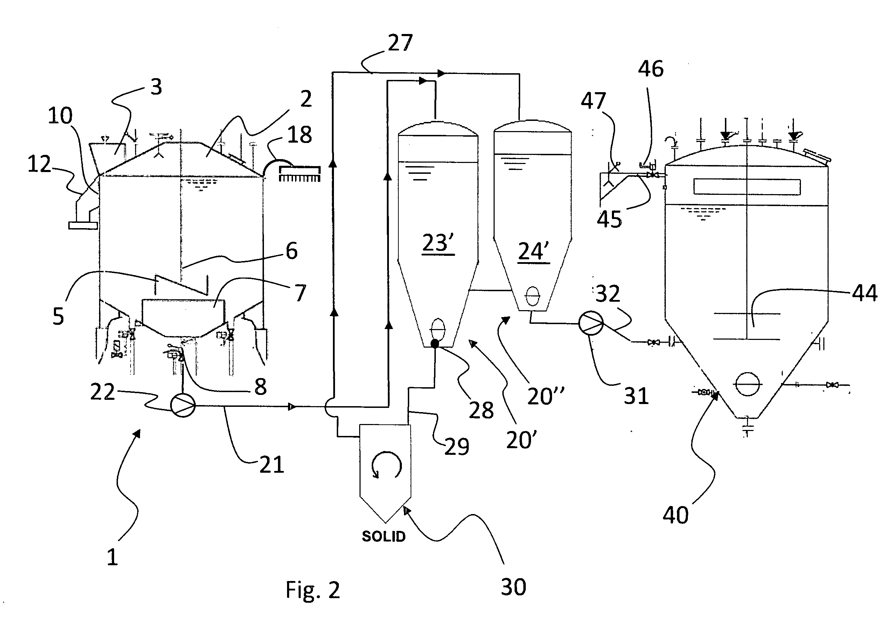

This feature is shown in fig. 2, wherein the apparatus 1 comprises a first storage tank 23' where the suspension arriving from the pulping vessel 2 is stored; the first storage tank 23' communicates downstream with the solid-liquid separator 30, that separates small heavy particles from the suspension.

Downstream of the separator 30 the suspension is fed to a second storage tank 24', from which it is then forwarded to the static separator 40.

This variant of the invention has the advantage that the two storage tanks 23' and 24' provide for a better compensation of the difference between the working conditions of the pulping vessel 2, that operates by batches, and the digestor (not shown in the drawings) that is carried out in a continuous manner.

Finally, it should be pointed out that the means for removing the low density particles that in the example shown comprise the port 10, the sliding shutter 11 and manifold 12 for the pulping vessel 2, and the spilling conduit 45, valve 46 and trough 47 applied on the static separator 40, could be replaced by any other suitable means that would allow to drain the upper layer of the suspension with the low density particles floating thereon. It has just to be added here that removal of the low density particles in connection with the static separator 40, could also be in principle not necessary because, as explained above, the low density particles might have already been sufficiently removed when fluid is processed in the pulping vessel 2.

## Claims

1. Wet pre-treatment process of waste materials for anaerobic digestion, comprising the following steps:
- subjecting a mixture of waste material and water to shearing forces thereby obtaining a crude mixture;
- treating the crude mixture to obtain a suspension substantially free of particles of non-digestable material,
**characterized in that** it comprises at least one step of removing small dimension particles of low density material, carried out by evacuating a surface layer of at least one among the crude mixture and the suspension.

2. Process according to claim 1, further comprising a rinsing step of a vessel (2) where the crude mixture is obtained, and wherein said at least one step of removing the small dimension particles of low density material is carried out by evacuating a surface layer of at least one among the crude mixture, the suspension and the rinsing water of the vessel.

3. Process according to claim 1 or 2, wherein before removing the small dimension particles of low density material, a raking cycle is carried out to take away larger contaminants from the crude mixture.

4. Process according to claim 1, 2 or 3, wherein before said step of removing the small dimension particles of low density material, the crude mixture is stirred thereby allowing the small particles to reach the surface.

5. Process according to claim 4, wherein the crude mixture is stirred by mechanical or fluid means.

6. Process according to any of the preceding claims, wherein before removing the small dimension particles of low density material, the suspension is stirred thereby allowing the small particles to reach the surface.

7. Process according to claim 5, wherein the suspension is stirred by mechanical or fluid means.

8. Apparatus for carrying out a process according to any of the preceding claims, comprising at least a pulping vessel (2), a storage tank (20; 23', 24') and a solid-liquid separator (30), **characterized in that** the pulping vessel comprises means (10, 11, 12) for evacuating a surface layer of a fluid contained therein.

9. Apparatus according to claim 8, wherein said means comprise a port (10) arranged in the upper part of the vessel (2) and a shutter (11) for closing said port.

10. Apparatus according to claim 8, further comprising limit switches (15a-15e) for checking the level of opening or closing of the port (10) by the shutter (11).

11. Apparatus according to any of claims from 8 to 10, comprising a static separator (40) arranged downstream the pulping vessel (2) and including a vessel provided with means (45, 46, 47) for evacuating a surface layer of a suspension contained therein.

12. Apparatus according to claim 11, wherein said evacuating means comprises a spilling conduit (45) protruding from the upper part of the static separator (40), and a collecting through (47) in fluid communication therewith.

13. Apparatus according to claim 12, wherein the static separator (40) is provided with means (44) for stirring the suspension contained therein.

14. Apparatus according to claim 13, wherein said stirring means comprises a stirrer (44) for mechanical agitation of the suspension.

15. Apparatus according to claim 13, wherein said stirring means comprises air or liquid jet emitting means.
